Europäisches Patentamt

European Patent Office

Office européen des brevets

(11) Publication number: 0 513 484 A2

# EUROPEAN PATENT APPLICATION

(21) Application number: 92103362.7

(22) Date of filing: 27.02.92

(51) Int. Cl.5: G06F 1/00

(30) Priority: 19.03.91 US 671047

(43) Date of publication of application:
19.11.92 Bulletin 92/47

(84) Designated Contracting States:
DE FR GB IT

(71) Applicant: Bull HN Information Systems Inc.
Corporation Trust Center 1209 Orange Street
Wilmington Delaware(US)

(72) Inventor: Howarth, David I.
92 Tadmuck Road
Westford, Massachusetts 01866(US)

(74) Representative: Altenburg, Udo, Dipl.-Phys. et
al
Patent- und Rechtsanwälte
Bardehle-Pagenberg-Dost-Altenburg
Frohwitter-Geissler & Partner Postfach 86 06
20
W-8000 München 86(DE)

(54) Digital network access authorisation.

(57) In a distributed data system serving a large geographical area and having several network management systems, each for managing system components in a portion of the geographical area, the system including a number of workstations at which administrative commands for configuring or monitoring the network may be entered, each network management system and each workstation hosting a number of software processes, a method is provided of storing in the network management systems and not in the workstations the information required to determine that an operator at a workstation is authorized to access the network, rendering such information less susceptible of tampering. The trusted system appends to each request from a workstation the operator's user identification, account number, and corporate affiliation; process to which such requests are routed for disposition may perform checks regarding the appropriateness of fulfilling the request in light of these parameters. Workstations not originating any messages for a predetermined time are automatically logged off to reduce the possibility of unauthorized persons entering requests at a logged-on workstation whose operator has left the vicinity.

FIG. I

## BACKGROUND OF THE INVENTION

### 1. Field of the Invention

The invention pertains to networks of distributed digital data systems, particularly to enhancing the reliability and functionality of network management functions by providing an interprocess message transmission method within such networks.

### 2. Description of the Prior Art

The invention is embodied in an EFTPOS (Electronic Funds Transfer / Point of Sale) system such as the one described in U.S. Patent 4,879,716, "Resilient Data Communications System", issued November 7, 1989 to McNally et al (hereinafter, "the McNally patent").

A large number of point-of-sale (POS) terminals are distributed over a very large geographical area, perhaps on the order of an entire continent. A communications network is provided which transports data over the entire geographical area, and all the POS terminals are connected to it, through telephone lines and intelligent line concentrators (called network access controllers, or "NACs"). Also connected to the communications network are computers operated by financial institutions.

The POS terminals are typically placed into service by merchants, who then accept transactions from consumers who carry plastic credit cards or debit cards which bear in machine-readable form an identification of a financial institution which maintains an account for the consumer, and an identification of that account. The primary function of the system is to forward from the POS terminals to the financial institution computers information identifying a consumer's account and a transaction the consumer wishes to make in that account, and to return from the financial institution to the POS terminal either an acceptance or rejection of that transaction.

A merchant wishing to place a POS terminal into service typically obtains the necessary equipment (the terminals and associated modems, etc.) from a "service provider" organization. Such an organization might have no role in the EFTPOS system beyond that of providing equipment, or larger merchants and financial institutions might function as service providers; in that case the latter role is kept separated from the former.

In addition to line concentrators for POS terminals and computers of financial institutions being connected to the communications network as described above, two other classes of equipment are connected to it which exist ancillarily to the system's aforementioned primary function: network management systems (NMSs), and management workstations (WSs). (WSs are not specifically discussed in the McNally patent, but are at the heart of SAFs 12 and are attached to NMSs 14 to provide an interface between operators and NMSs.)

NMSs are responsible for overall control and monitoring of the EFTPOS system; WSs are used by the network provider organization and service provider organizations to control and monitor particular equipment and communication paths for which they are responsible. As described in the McNally patent, the NACs can be dynamically reconfigured and can report their present status; operators and administrators at the WSs may enter commands to reconfigure the systems or commands requesting information on the current status of the systems. Commands originating at a WS are passed to an NMS for verification that the action or information requested is within the purview of the requesting organization, and are acted upon by the NMS following that verification.

The WSs and NMSs have software running in them to effect the entry of such commands and the responses to them. Each particular type of command typically invokes a particular path through the software, causing the execution of executable paths that are provided to perform particular functions required for a particular command. A software entity dedicated to a discrete function is known in the software arts as a "process".

WSs and NMSs are distributed throughout the geographical area served by the system. The NMS in a particular region of the geographical area generally exercises direct control and monitoring of the POS terminals and NACs in that particular region. A request pertaining to such a terminal or NAC and originating from a process in a WS or NMS in a different region must be forwarded over the communications network to a process in the NMS having cognizance of the target NAC, and a response must be forwarded back to the requesting process.

Under this scheme, WSs can be located anywhere in the geographical area served by the network. From the standpoint of system security, no assumptions should be made about the security of the facilities in which they are located; it may not be safely assumed that unauthorized personnel are precluded from having access to the WSs.

In accord with practices well known in the prior art, the present embodiment requires an operator logging on at a WS to provide a "password", presumably not known to unauthorized persons; the password provided by the person attempting to log on is compared with a prestored expected password, and the operator is not permitted to proceed in the event of noncomparison.

A drawback of the prior art, particularly affecting distributed systems, is that once an operator is logged on to the system, nodes other than the node that verified his logon cannot perform further security checks or verifications.

## Summary of the Invention

The present invention overcomes this drawback of the prior art by providing a reliable method of identifying the workstation user originating a message. The NMS to which a workstation is connected associates the user's identification, account, and corporate affiliation with the connection. This association occurs after the user's credentials have been verified at sign-on. Then the user's identification, account, and corporate affiliation are appended to each and every message received from the workstation. Any process receiving a message from the work-station then has reliable information with which to implement security policies.

## Objects of the Invention

It is thus an object of the invention to improve security of distributed data systems.

This and other objects of the invention will be apparent to those skilled in the art after reviewing the following description of the preferred embodiment and the appended drawings, wherein:

## Brief Description of the Drawings

Figure 1 provides an overview of the distributed data system in which the present invention is embodied.

Figure 2 provides further detail of that portion of the distributed data system embodying the present invention.

Figure 3 is an overview of the method of the present invention.

## Description of the Preferred Embodiment

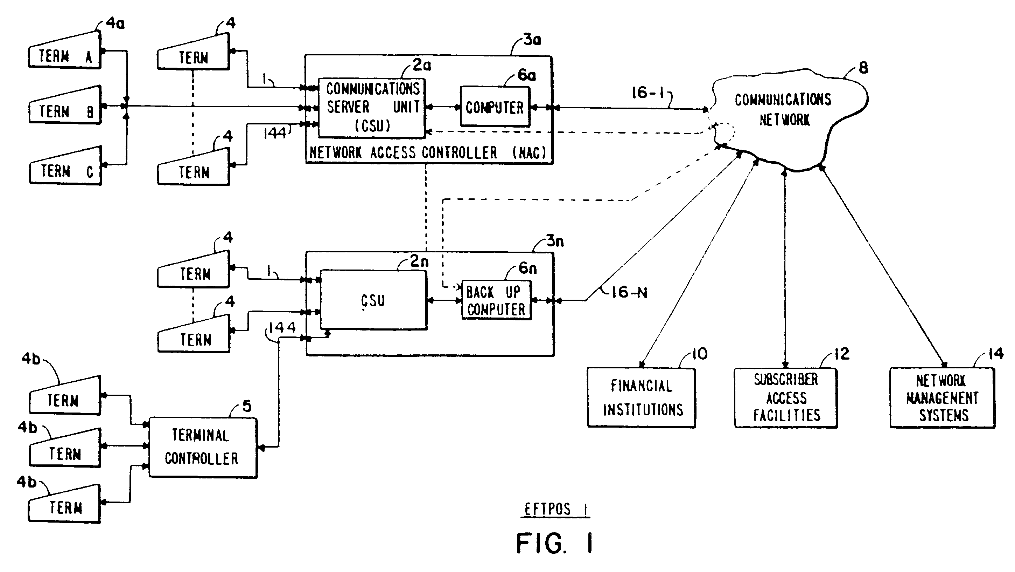

Figure 1, reproduced here from the McNally patent, provides an overview of the system in which the present invention is embodied, showing NACs 3, terminals 4, communications network 8, financial institutions 10, SAFs 12, NMSs 14, and communication lines 16. As noted above, workstations (WSs) are at the heart of SAF's 12; also, WSs are attached to NMSs 14.

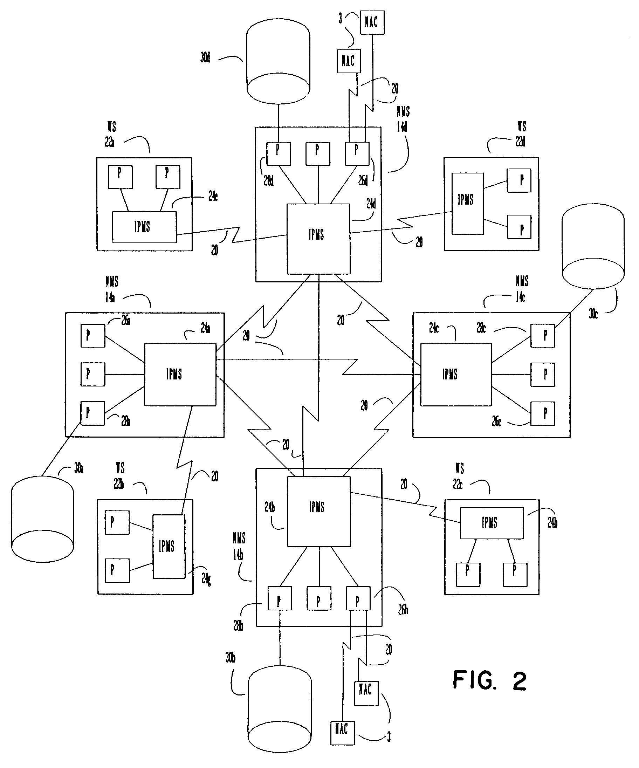

Figure 2 provides greater detail in those portions of the system directly involved with the present invention. Four NMSs 14 are shown (the number four being chosen arbitrarily), denoted 14a through 14d. Four workstations (WSs) 22 (denoted 22a through 22d) are shown.

Each NMS and WS is depicted as hosting a number of processes "P". These are software processes; i.e., as discussed above, software entities dedicated to particular functional tasks.

The units depicted in Figure 2 are shown as being interconnected by communication links 20. These links are conceptual, and might be implemented through communications network 8, or they might be LANs, WANs, leased or switched telephone lines. Regardless of the nature of the link between a WS and an NMS, a WS is normally linked to only one NMS; should the WS originate a command that must ultimately be resolved by a different NMS, said different NMS will be accessed as a result of NMS-to-NMS communication, and not by virtue of establishing a link between the WS and said different NMS.

A number of NACs 3 are shown in Figure 2. As has been discussed, the primary purpose of the system is to carry data pertaining to financial transactions bidirectionally from terminals 4 (not shown in Figure 2) through NACs 3 to financial institutions 10 (also not shown in Figure 2). Figure 2 does not depict this role of the NACs 3, but rather depicts the paths by means of which NACs 3 are controlled and interrogated. Of the plurality of processes shown in NMSs 14, processes 26 (26a through 26d) are instances of a process called the Administrative Traffic Switch (ATS) process, the function of which is pass control messages to NACs and to receive status and alarm information from NACs.

Working closely with ATS processes 26 are Network Status Monitor (NSM) processes 28, having an instance in each NMS. NSM 28 maintains a running record of the status of all the NACs (and all the data paths to terminals 4 effectuated by those NACs) within the administrative purview of a particular NMS.

Other processes anywhere in the system may wish to interrogate an instance of NSM 28 to determine the status of a system component or path, or to have an instance of ATS 26 forward an administrative command to a NAC. As Figure 2 shows, every WS and NMS has resident an instance of the Inter-Process Message Service (IPMS) 24. Processes, regardless of whether resident in the same WS or NMS, do not communicate with each other directly, but through the IPMS.

Two system rules are adopted to make implementation easier, and are not inherent or essential: It is a system rule that processes in different workstations may not communicate with each other. It is also a system rule that any interprocess communication, only one NMS-to-NMS transmission is permitted. (In order to facilitate this, each NMS has a link 20 to every other NMS. This simplifies the detection of messages routed in a loop, and it minimizes transmission overhead. Neither is essential to the scheme as well-known algorithms exist for loop detection and transmission overheads are commonly traded against cost.)

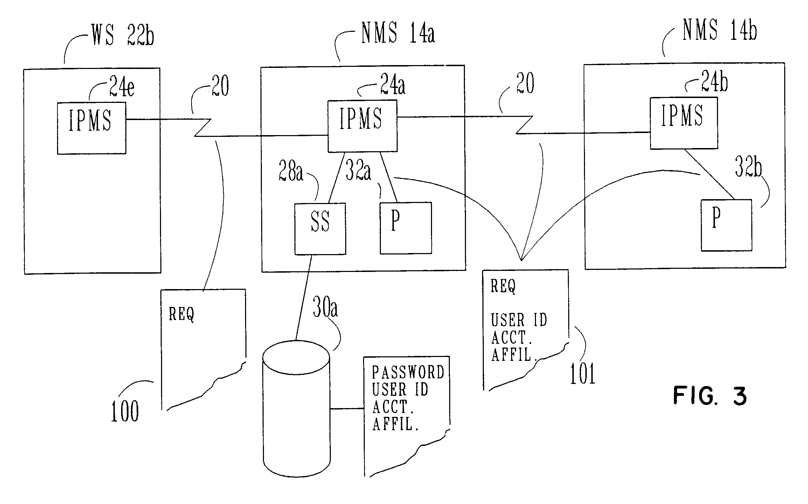

An operator at a WS 22 must "log on" to the system before he is permitted to invoke any actions or access any data. At a keyboard (not shown) or similar device associated with a WS, he enters a logon request comprising at least a user ID (perhaps his name or a derivative thereof) and a password, and which may further comprise an account number, used for administrative division of various tasks the operator may perform. His logon request is passed over a communication link 20 to the IPMS process in the NMS with which the WS is associated, seen in Figure 3 to be assumed to be NMS 14a. At this point the IPMS process has no cognizance of communicating with any particular human operator, but only that it is receiving communications over a particular connection.

IPMS 24a invokes the Security Services process SS 28a, which accesses a file on storage medium 30a and retrieves, for the user ID provided by the operator, a prestored password and compares the prestored password with the password provided by the operator; in the event of noncomparison, the connection is not accorded a "logged on" status. If there is a comparison, the connection is considered "logged on", and remains so until the connection requests logoff, or until NMS 14a logs it off as a result of not receiving anything over it for a predetermined period of time, as will be discussed further below; while the connection is logged on, the operator may enter requests for system services. While he is logged on, SS 28a associates his password, user ID, account ID, and corporate affiliation as retrieved from the file on storage medium 30a with his connection.

Since WSs may be located anywhere and connected to NMSs via communications links 20, it is important that the files on storage medium 30a are located at the NMS (a "trusted facility", presumably with very strict access procedures) and that the verification is performed there; the possibility of tampering with the files or the logon process is greatly reduced. There remains the possibility that an unauthorized person learns an authorized operator's password and provides it in a logon request from a WS; this can be obviated by well-known procedures regarding passwords (not using as passwords words that have an association with the operator, changing passwords periodically, etc.).

It is seen in Figure 3 that when a logged-on operator at a WS 22b enters at his keyboard (not shown) a request which cannot be resolved within that WS (i.e., which must be passed to another component of the system), a message 100 containing the request is passed over a communication link 20 to the IPMS process of the NMS to which that WS is connected, here assumed to be IPMS 24a in NMS 14a. IPMS 24a receives the message and appends the user ID, account ID, and corporate affiliation associated with the operator's connection; IPMS 24a determines (by means not germane to an understanding of the present invention) what process must be invoked to fulfill the operator's request, and whether that process is located in NMS 14a or in some other NMS (of which only NMS 14b is shown on Figure 3). IPMS 24a will accordingly forward a message 101 either directly to process 32a, or over a communication link 20 to IPMS 24b in NMS 14b, which in turn forwards it to a process 32b; in either case, the message includes not only the operator's request, but also his user ID, account ID, and corporate affiliation. The process 32a or 32b invoked to fulfill his request not only may presume that the request originated from a validly logged-on operator (because of the verification performed at a "trusted system", as described), but may further perform checks as to whether the service or data access requested is appropriate to an operator having the particular attributes included in the request message.

If a logged-on operator leaves his WS, and if an unauthorized person enters requests at it, NMS 14a has no way of determining that these requests are not originating from the authorized operator. Primary responsibility for such situations must rest with the entities that control access to the WSs and with the authorized operators (who have the option of logging off before leaving their WSs), but a feature of the present invention lessens the possibility for such unauthorized entry of requests. IPMSs 14 note the times at which messages are received from logged-on WSs, and periodically determine if there are any such WSs from which no messages have been received in a first predetermined time; messages are sent to such WSs informing them that if no messages are received from them in a second predetermined time, they will be logged off. If nothing is received from such a WS before the expiration of the second predetermined time, it is in fact logged off. When the authorized operator returns to it, he can log on again; but an unauthorized person (who presumably does not know a valid password) approaching the WS is unable to enter any requests.

Those skilled in the art will perceive applications of the invention in embodiments other than the one described here. The invention is intended to be embraced by the appended claims and not limited by the foregoing embodiment.

**Claims**

1. In a distributed digital data network comprising a plurality of interconnected control nodes with one of more workstations connected to each control node, the control nodes being responsive to requests entered at the workstations by operators, each of whom has logged on to the network by identifying himself and providing a password matching a password prestored for him, the control nodes being located in controlled-access trusted facilities and the workstations being located in untrusted facilities, a method of enhancing network security comprising the steps of:

entering and storing a prestored password for an operator at a trusted facility; and

forwarding from a workstation to a control node at a trusted facility a password provided by an operator attempting to log on and performing comparison with a password prestored for that operator within the control node at the trusted facility.

2. The method recited in claim 1 wherein further each control node is controlled by software organized as a plurality of processes, and a first certain process in each control node receives requests from workstations and forwards requests to second processes for disposition
and wherein the method further includes the steps of

storing with each operators prestored password his account number, his user identification, and his corporate affiliation;

retrieving each operators password, user account number, user identification, and corporate affiliation responsive to the first certain process upon its receipt of a request from an operator;

forwarding to the second process the user account number, user identification, and corporate affiliation along with a request from an operator; and

verifying in the second process that the action requested is appropriate to the user account number, user identification, and corporate affiliation.

3. In a distributed digital data network comprising a plurality of interconnected control nodes with one of more workstations connected to each control node, the control nodes being responsive to requests entered at the workstations by operators, each of whom has logged on to the network by identifying himself and providing a password matching a password prestored for him, the control nodes being located in controlled-access trusted facilities and the workstations being located in untrusted facilities,

each control node is controlled by software organized as a plurality of processes, and a first certain process in each control node receives requests from workstations and forwards requests to second processes for disposition,

a method of enhancing network security comprising the steps of:

entering and storing a prestored password for an operator at a trusted facility;

forwarding from a workstation to a control node at a trusted facility a password provided by an operator attempting to log on and performing comparison with a password prestored for that operator within the control node at the trusted facility;

storing with each operators prestored password his account number, his user identification, and his corporate affiliation;

retrieving each operators password, user account number, user identification, and corporate affiliation responsive to the first certain process upon its receipt of a request from an operator;

forwarding to the second process the user account number, user identification, and corporate affiliation along with a request from an operator; and

verifying in the second process that the action requested is appropriate to the user account number, user identification, and corporate affiliation.

4. The method recited in claim 1, wherein further:

each control node notes times at which requests are received from each workstations connected to it, and each control node logs off operators at workstations from which no requests are received for a predetermined period of time.

5. The method recited in claim 2, wherein further:

each control node notes times at which requests are received from each workstations connected to it, and each control node logs off operators at workstations from which no requests are received for a predetermined period of time.

6. The method recited in claim 3, wherein further:

each control node notes times at which requests are received from each workstations connected to it, and each control node logs off operators at workstations from which no requests are received for a predetermined period of time.

EP 0 513 484 A2

EFTPOS 1

FIG. 1

FIG. 2

FIG. 3